# EUROPÄISCHE PATENTANMELDUNG

(11) **EP 1 199 660 A1**
(43) Veröffentlichungstag der Anmeldung: **24.04.2002**
(21) Anmeldenummer: 01124631.1
(22) Anmeldetag: 16.10.2001
(51) Int. Cl.: G06F 17/60

(54) **Einrichrung zur automatischen Bestellung von Speisen und/oder Getränken**

(30) Priorität: 19.10.2000 DE 10051813
(71) Anmelder: Herzmann, Bernd, Dipl.-Ing. (FH), 72768 Reutlingen (DE)
(72) Erfinder: Herzmann, Bernd, Dipl.-Ing. (FH), 72768 Reutlingen (DE)
(74) Vertreter: Möbus, Daniela, Dr.-Ing.

(57) **Zusammenfassung**

Eine Einrichtung zur automatischen Bestellung von Speisen und/oder Getränken in einem Restaurant oder dergleichen mit mindestens einem Mobiltelefon (10) zur Aufgabe der Bestellung über SMS oder E-Mail und mit mindestens einer zentralen Datenverarbeitungseinrichtung (14), die die SMS oder E-Mail via Internet und/oder das Mobilfunknetz empfängt und verarbeitet.

## Beschreibung

Bei der Bestellung von Speisen und Getränken in Restaurants ergeben sich häufig für den Gast nicht unerhebliche Wartezeiten auf die Bedienung zur Aufnahme der Bestellung oder zur Bezahlung der Rechnung. Insbesondere in Stoßzeiten sind selbst in gut organisierten Restaurants längere Wartezeiten kaum zu vermeiden, was zur Verärgerung der Gäste führt. Es sind daher bereits elektronische Bestellsysteme vorgeschlagen worden, um eine weitgehende Unabhängigkeit der Bestellung von einer Bedienung zu erzielen. Alle bisher bekannten Lösungen benötigen jedoch einen relativ hohen Investitionsaufwand für den Restaurant-Besitzer. Die bekannten Systeme erfordern an allen Tischen ein Terminal zur Eingabe der Bestellung bzw. eine so genannte elektronische Speisekarte als Eingabemedium für den Gast. Diese Terminals oder elektronischen Speisekarten müssen anschließend in der Regel über Kabel mit einem zentralen Rechner verbunden werden, der dann die Bestellungen weiterverarbeitet. Aufgrund des hohen Investitionsaufwandes haben sich diese Bestellsysteme bisher nicht durchgesetzt.

Der vorliegenden Erfindung liegt die Aufgabe zugrunde, eine Möglichkeit zur automatischen Bestellung von Speisen und/oder Getränken zu schaffen, die nur einen minimalen Investitionsaufwand für den Restaurant-Besitzer bedeuten.

Die Aufgabe wird mit einer Einrichtung zur automatischen Bestellung von Speisen und/oder Getränken in einem Restaurant oder dergleichen gelöst, mit mindestens einem Mobiltelefon zur Aufgabe der Bestellung über SMS oder E-Mail und mit mindestens einer zentralen Datenverarbeitungseinrichtung, die die SMS oder E-Mail via Internet und/oder das Mobilfunknetz empfängt und verarbeitet.

Mit der erfindungsgemäßen Einrichtung können Kabelverbindungen zwischen den Tischen des Restaurants und dem mindestens einen Zentralrechner entfallen. Da heutzutage auch immer mehr Menschen ein Mobiltelefon besitzen und dieses auch ständig mit sich tragen, kann zumindest in Zukunft auch auf das Bereitstellen separater Mobiltelefone auf den einzelnen Tischen verzichtet werden. Die Gäste verwenden dann einfach ihre eigenen Geräte, deren Bedienung sie sowieso bestens beherrschen. Es können aber selbstverständlich auch spezielle Mobiltelefone für die Tische bereitgestellt werden, die gerade für das Versenden von SMS oder E-Mail ausgelegt und optimiert sind, sodass sich eine besonders einfache Bedienung ergibt.

Bei dem erfindungsgemäßen System kann auch auf spezielle Speisekarten verzichtet werden. Es können alle bekannten Arten von Speisekarten verwendet werden, wobei die Speisen zweckmäßigerweise mit einer Codenummer versehen sein können, aber nicht müssen. Via SMS kann immerhin eine Folge von 160 Zeichen eingegeben und übermittelt werden. Damit können die Speisen sogar in Worten eingegeben werden. Weiterhin muss der Gast seine Tischnummer eingeben und die Art des Service, die er wünscht, z. B. "Bestellung aufnehmen", "bezahlen", "Bestellung stornieren" oder "Bedienung anfordern". Hierfür können beispielsweise entsprechende Codenummern eingegeben werden, die durch entsprechende Trennzeichen voneinander abgesetzt sind.

In der mindestens einen zentralen Datenverarbeitungseinrichtung werden die Bestellungen empfangen und entsprechend weiterverarbeitet. Dabei kann die mindestens eine zentrale Datenverarbeitungseinrichtung über ein analoges Modem, einen ISDN-oder T-DSL-Anschluss mit dem Internet verbunden sein und/oder ein Mobiltelefon aufweisen, das mit ihr über ein Modem oder eine serielle oder Irda-Schnittstelle verbunden ist. Diese Anschlüsse an das Internet sind heutzutage sowieso bei fast jedem Rechner vorhanden, sodass dadurch keine Zusatzkosten für den Restaurant-Besitzer entstehen. Verkabelungen mit den Tischen können vollständig entfallen.

Insbesondere bei kleineren und mittleren Restaurants reicht es vollständig aus, wenn die mindestens eine zentrale Datenverarbeitungseinrichtung ein Personalcomputer ist. Bei größeren Betrieben kann auch ein Zentralrechner eingesetzt werden, an den mehrere Monitore an unterschiedlichen Stellen angeschlossen werden können. Die Monitore können auch zur Erhöhung des Bedienungskomforts mit einem Touch-Screen ausgestattet sein. Selbstverständlich lassen sich jedoch auch mehrere Datenverarbeitungseinrichtungen, beispielsweise Personalcomputer einsetzen, die untereinander vernetzt sind.

Die mindestens eine zentrale Datenverarbeitungseinrichtung kann zweckmäßigerweise mit einem Bestellungs- und/oder Rechnungsdrucker versehen sein. Auf dem Bestellungsdrucker kann die aufgenommene Bestellung ausgedruckt und dann an den Ausschank oder die Küche weitergeleitet werden. Gleichzeitig kann nicht nur die Bestellung sondern auch das gesamte Rechnungswesen über die Datenverarbeitungseinrichtung abgewickelt werden, wodurch das Bedienpersonal weiter entlastet wird. Die Rechnungen können über denselben Drucker wie die Bestellungen ausgedruckt werden. Es besteht aber natürlich auch die Möglichkeit, einen separaten Rechnungsdrucker an die Datenverarbeitungseinrichtung anzuschließen.

Eine besonders komfortable Nutzung des vorgeschlagenen Systems lässt sich durch Verwendung von WAP-fähigen Mobiltelefonen erreichen. Mit diesen können auch Tnformationen, die von der zentralen Datenverarbeitungseinrichtung ausgesendet werden, empfangen werden. Es ließe sich damit z. B. die gesamte Speisekarte auf das Mobiltelefon übermitteln und dort in das Menü integrieren, sodass die Speisenauswahl durch einfaches Anklicken erfolgen kann. Die Bestellung wird dann über das Internet wieder an die zentrale Datenverarbeitungseinrichtung gesendet und dort wie bereits beschrieben verarbeitet.

Auch Bedienungen können mit der erfindungsgemäßen Einrichtung Bestellungen aufnehmen und weiterleiten und dabei vorzugsweise ein speziell auf SMS oder E-Mail zugeschnittenes Mobiltelefon verwenden. Hierzu kann aber auch ein PDA, der mit einem Funk-Modem oder einem Mobiltelefon verbunden ist, eingesetzt werden.

Nachfolgend wird anhand der Zeichnung eine bevorzugte Ausführungsform einer erfindungsgemäßen Einrichtung näher erläutert.

Es zeigen:
- Fig. 1: ein Blockschaltbild einer erfindungsgemäßen Einrichtung;
- Fig. 2: ein Blockschaltbild einer möglichen Ausgestaltung einer zentralen Datenverarbeitungseinrichtung der Einrichtung aus Fig. 1.

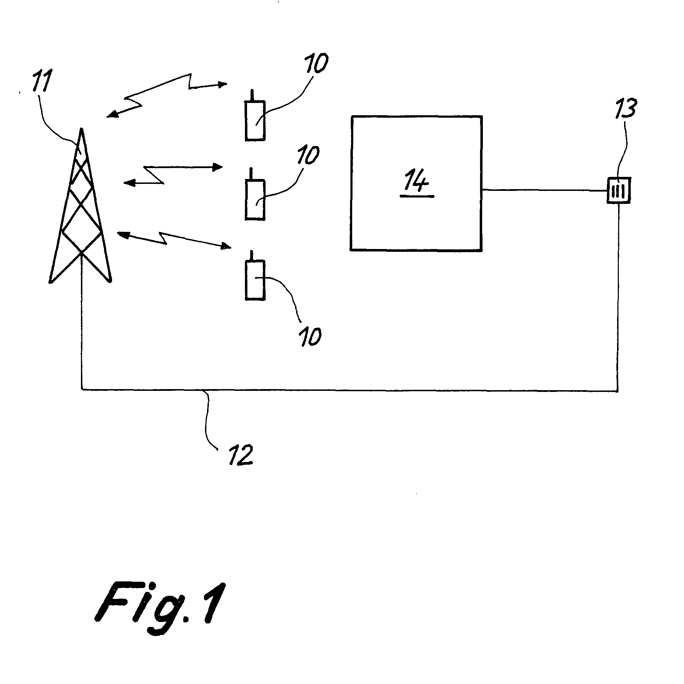

Gemäß Fig. 1 weist die Einrichtung mehrere Mobiltelefone 10 auf, mit denen die E-Mail-Adresse, an die die Bestellung übermittelt werden soll, und die Bestellung der gewünschten Speisen und Getränke unter Angabe entweder der Namen der Speisen und Getränke oder deren Codenummern, der gewünschten Anzahl sowie der Tischnummer eingegeben wird. Zweckmäßigerweise kann hierzu auf jedem Tisch des Restaurants eine Bedienungsanleitung für die Bestellung ausgelegt sein. Die Bestellungsinformation wird anschließend zu einer Basisstation 11 eines Mobilfunknetzes übertragen und von dort in das Telefonnetz eingespeist, von dem hier eine Telefonleitung oder Funkverbindung 12 symbolisch dargestellt ist. Die Bestellung gelangt so zu einem Telefonanschluss 13 im Restaurant, an den eine zentrale Datenverarbeitungseinrichtung 1.4 angeschlossen ist. Die Datenverarbeitungseinrichtung 14 empfängt und entschlüsselt die empfangenen Bestellungsdaten und leitet sie in elektronischer oder gedruckter Form an die Küche bzw. den Ausschank weiter. Es wäre auch denkbar, die Datenverarbeitungseinrichtung 14 selbst mit einem Mobiltelefon auszustatten, das mit einem Modem mit der Datenverarbeitungseinrichtung 14 verbunden ist. Die Übertragung zwischen den Mobiltelefonen 10 der Bestellenden und dem Mobiltelefon der Datenverarbeitungseinrichtung 14 erfolgt dann ausschließlich über das Mobilfunknetz ohne Zwischenschaltung des Festnetzes.

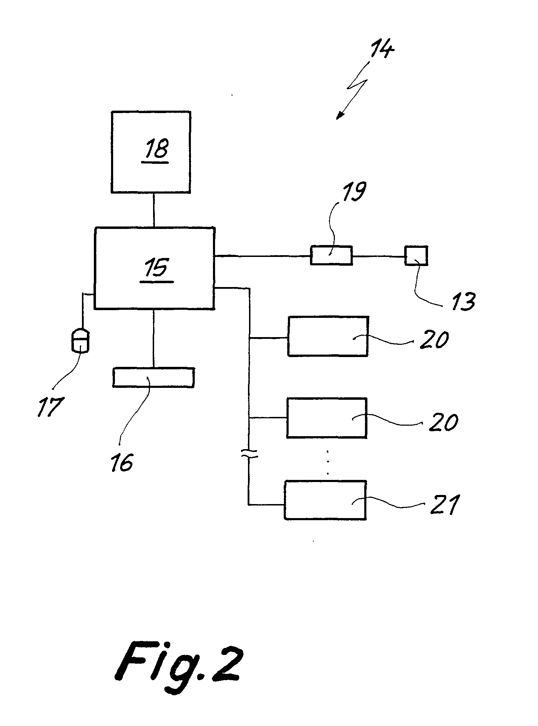

Ein möglicher Aufbau der Datenverarbeitungseinrichtung 14 aus Fig. 1 ist in Fig. 2 dargestellt. Die Datenverarbeitungseinrichtung 14 weist einen Personalcomputer 15 auf, an den eine Tastatur 16, eine Maus 17 sowie ein Monitor 18 angeschlossen sind. Die Bestelldaten werden über die Telefondose vom Personalcomputer 15 empfangen und auf dem Monitor 18 angezeigt. Mit Hilfe der Tastatur 16 und/oder der Maus 17 können die empfangenen Daten dann weiterverarbeitet werden, beispielsweise zu Bon-Druckern in der Küche oder zum Ausschank, um das Zubereiten der Speisen und Getränke zu veranlassen. Diese Vorgänge können selbstverständlich auch automatisiert und alleine vom Rechner 15 durchgeführt werden. Mit Hilfe des Personalcomputers 15 kann auch gleich die Rechnung für die Bestellung erstellt und an den Bon-Drucker oder an einen entsprechenden Rechnungsdrucker 21 zur Ausgabe weitergeleitet werden.

Der dargestellte Aufbau der Einrichtung nach Fig. 1 sowie der dargestellte Aufbau der Datenverarbeitungseinrichtung 14 nach Fig. 2 sind lediglich beispielhaft. So könnte die Datenverarbeitungseinrichtung 14 auch mehrere miteinander vernetzte Personalcomputer auf weisen oder einen zentralen Rechner, bei dem mehrere Monitore 18 an unterschiedlichen Stellen angeschlossen werden können.

## Patentansprüche

1. Einrichtung zur automatischen Bestellung von Speisen und/oder Getränken in einem Restaurant oder dergleichen mit mindestens einem Mobiltelefon (10) zur Aufgabe der Bestellung über SMS oder E-Mail und mit mindestens einer zentralen Datenverarbeitungseinrichtung (14), die die SMS oder E-Mail via Internet und/oder das Mobilfunknetz empfängt und verarbeitet.

2. Einrichtung nach Anspruch 1., **dadurch gekennzeichnet, dass** jedem Tisch des Restaurants oder dergleichen mindestens ein Mobiltelefon (10) zugeordnet ist.

3. Einrichtung nach Anspruch 1 oder 2, **dadurch gekennzeichnet, dass** die mindestens eine zentrale Datenverarbeitungseinrichtung (14) über ein analoges Modem (19), über einen ISDN- oder T-DSL-Anschluss mit dem Internet verbunden ist und/oder ein Mobiltelefon (10) aufweist, das mit ihr über ein Modem oder eine serielle oder Irda-Schnittstelle verbunden ist.

4. Einrichtung nach einem der Ansprüche 1 bis 3, **dadurch gekennzeichnet, dass** die mindestens eine zentrale Datenverarbeitungseinrichtung (14) einen Personalcomputer (15) aufweist.

5. Einrichtung nach Anspruch 4, **dadurch gekennzeichnet, dass** der Personalcomputer (15) mit einer PC-Karte ausgerüstet ist, die die Funktion eines Mobiltelefons (10) übernimmt und/oder einen Modem-Anschluss an das Internet darstellt.

6. Einrichtung nach einem der Ansprüche 1 bis 5, **dadurch gekennzeichnet, dass** mehrere zentrale Datenverarbeitungseinrichtungen (14) vorgesehen sind, die untereinander vernetzt sind.

7. Einrichtung nach einem der Ansprüche 1 bis 6, **dadurch gekennzeichnet, dass** die mindestens eine zentrale Datenverarbeitungseinrichtung (14) mit einem Bestellungs-und/oder Rechnungsdrucker (20, 21) verbunden ist.

8. Einrichtung nach einem der Ansprüche 1 bis 7, **dadurch gekennzeichnet, dass** das mindestens eine Mobiltelefon (10) WAP-fähig ist.
